# EUROPEAN PATENT SPECIFICATION

(11) **EP 4 246 671 B1**
(45) Date of publication and mention of the grant of the patent: **23.07.2025**
(21) Application number: 23160257.4
(22) Date of filing: 06.03.2023
(51) Int. Cl.: H01M 50/103, H01M 50/15, H01M 10/052, H01M 50/169

(54) **BATTERY CASE AND SECONDARY BATTERY INCLUDING THE SAME**
BATTERIEGEHÄUSE UND SEKUNDÄRBATTERIE DAMIT
BOÎTIER DE BATTERIE ET BATTERIE SECONDAIRE LE COMPRENANT

(30) Priority: 18.03.2022 JP 2022043910
(43) Date of publication of application: 20.09.2023
(73) Proprietor: Prime Planet Energy & Solutions, Inc., Chuo-ku Tokyo 103-0022 (JP)
(72) Inventor: TANIMOTO, Koichi, Tokyo 103-0022 (JP); UMEMURA, Kohji, Tokyo 103-0022 (JP)
(74) Representative: Kuhnen & Wacker Patent- und Rechtsanwaltsbüro PartG mbB

(56) References cited:
- JP-A- 2001 135 282
- JP-A- 2013 093 119
- JP-A- 2016 219 344

## Description

### BACKGROUND OF THE DISCLOSURE

### 1. Technical Field

The present disclosure relates to a battery case and a secondary battery including the same.

### 2. Background

Japanese Patent Application JP 2001-135282 A discloses a sealed battery in which a lid provided over the opening in an upper portion of a battery can is sealed by welding. This publication proposes that four corner steps are provided on the four curved corners of the inner surface of the opening in the upper portion of the battery can, and long side steps are formed on the inner surfaces of at least the long sides of the opening, and the battery lid is fitted and welded to the long side steps. In the technology proposed in the publication, steps are additionally provided in the long sides in addition to the four corner steps in the battery can, so that the battery lid can be reliably fitted and welded to a desired position.

Japanese Patent Application JP 2013-93119 A discloses a battery case including a square case body having a side wall which has long and short side surface portions, a bottom surface, and an opening, and a lid plate sealing the opening. This publication proposes that steps are provided in the short side surface portions of the case body, and tapered portions are formed below contact portions of the long side surface portions with the lid plate. In the technology proposed in the publication, the tapered portions are provided at predetermined positions of the long side surface portions. This substantially prevents entering of laser light on the long side surface portions.

Japanese Patent Application JP 2013-222705 A discloses a secondary battery including a case having a roughly rectangular parallelepiped shape and a cap plate covering the opening of the case. This publication proposes providing a triangular prism-shaped supports at four corners of the case. In the technology proposed in this publication, the supports are provided over the corners, which increase the thickness of the corners. Thus, deformation of the case is substantially prevented.

Japanese Patent Application JP 2014-10936 A discloses a square battery including a bottomed square tubular body member having a rectangular opening and a battery case having a rectangular lid member. The body member includes a pair of open long side portions, a pair of open short side portions, and four open R portions curved in an arc shape connecting the open long side portions and the open short side portions. The publication proposes providing support protrusions and low-position protrusions which protrude toward the inside of the body member. The support protrusions are portions provided over the entire open R portions. The low-position protrusions are portions provided over the entire open short side portions at lower positions than the support protrusions. The low-position protrusions are not in contact with the lid member. The technology proposed in this publication states that the low-position protrusions substantially prevent the energy beam (e.g., laser beam) from penetrating into the body member and thereby causing defects when the energy beam (e.g., laser beam) is applied for welding the battery case.

Japanese Patent Application JP 2016-219344 A discloses a method for welding a lid and a case body. In the welding method, a first pressing step and a second pressing step are carried out before laser welding. In the first pressing step, while a rectangular plate-like lid is kept attached to the rectangular opening of the case body, the respective central portions of a pair of long sides of the peripheral edges of the opening of the case body are pressed toward the lid from a sidewise direction of the case body. In the second pressing step, while the central portions are kept pressed, both side portions of the long sides adjacent to the central portions are pressed all at once, or both the side portions are divided into two or three or more portions, and they are pressed in order.

### SUMMARY OF THE INVENTION

The present disclosure is intended to improve assemblability when a sealing plate is attached to an opening of a case body.

The battery case disclosed herein includes: a case body in bottomed rectangular parallelopiped shape having a substantially rectangular opening in one side surface facing a bottom surface; and a substantially rectangular sealing plate attached to the opening and having a shape corresponding to an upper edge of the opening. The opening of the case body has: a pair of long side portions facing each other; a pair of short side portions located at both ends of the pair of long side portions and facing each other; R portions provided at four corners between the long side portions and the short side portions; and, steps protruding from the inner surfaces of the pair of short side portions. Each the R portions comprises a gradual change region. In the gradual change region, along each the R portions, a shape of each the steps changes to be gradually close to a shape of each the inner surfaces of the long side portions toward the long side portions.

With such a configuration, when the sealing plate is attached to the opening of the case body, a portion of the gradual change region in contact with the sealing plate is generated, and light press-fitting of press-fitting of the sealing plate into the opening with light force is easily achieved. When the light press-fitting is achieved, assemblability at the time when the sealing plate is attached to the opening of the case body is improved.

The inner surfaces of the pair of long side portions facing each other are tapered surfaces inclined inward toward their lower portions. In the gradual change region, the shape of each of the steps are configured to change so as to be gradually close to each of the tapered surfaces toward the long side portions.

In such a case, with the sealing plate attached to the opening, a gap which is wider toward the upper edge of the opening is formed between a portion where each of the tapered surfaces are formed and the sealing plate.

The gradual change region may be provided in a range from 45° or more and 90° or less from a center of each of the R portions, starting from a boundary between each of the R portions and each of the short side portions.

The edge of the lower surface of the sealing plate may be chamfered. In such a case, a region of the edge of the lower surface superimposed on the gradual change region with the sealing plate attached to the opening may be chamfered according to the shape of the gradual change region.

The battery case may be applied to secondary batteries.

### BRIEF DESCRIPTION OF THE DRAWINGS

Fig. 1 is a partial sectional view of a secondary battery 10.
Fig. 2 is a plan view of a case body 41a.
Fig. 3 is a sectional view taken along line III-III of Fig. 2.
Fig. 4 is a sectional view taken along line IV-IV of Fig. 2.
Fig. 5 is a partially enlarged view of Fig. 2.
Fig. 6 is a view seen from the arrow A in Fig. 5.
Fig. 7 is a sectional view of a gradual change region 47c3.
Fig. 8 is another sectional view of the gradual change region 47c3.
Fig. 9 is a plan view of the secondary battery 10 with a sealing plate 41b attached.
Fig. 10 is a back surface view of the sealing plate 41b.
Fig. 11 is a sectional view of an opening 41a1 with the sealing plate 41b attached thereto.
Fig. 12 is another sectional view of an opening 41a1 with the sealing plate 41b attached thereto.

### DETAILED DESCRIPTION OF THE PREFERRED EMBODIMENTS

The following describes embodiments of the present disclosure. The embodiments described herein are naturally not intended to limit the present disclosure. Each drawing has been schematically illustrated and therefore may not necessarily reflect actual elements. The expression "A to B" indicating a numerical range means "A or more and B or less," and also means "above A and below B" unless otherwise specified. In the drawings described below, the same members/portions which exhibit the same action are denoted by the same reference numerals, and the duplicated descriptions may be omitted or simplified.

The "secondary battery" herein generally refers to an electricity storage device which causes a charging and discharging reaction by movement of charge carriers between a pair of electrodes (a positive electrode and a negative electrode) via an electrolyte. The "secondary battery" herein encompasses so-called secondary batteries such as a lithium-ion secondary battery, a nickel hydride battery, and a nickel cadmium battery, and capacitors such as an electric double-layer capacitor. The following describes the embodiments of the battery case and the secondary battery including the same disclosed herein, using a lithium-ion secondary battery as an example among secondary batteries. The disclosure herein is not limited to the lithium-ion secondary battery and can be applied to other secondary batteries, unless otherwise mentioned.

### <<First Embodiment>>

### <Secondary Battery 10>

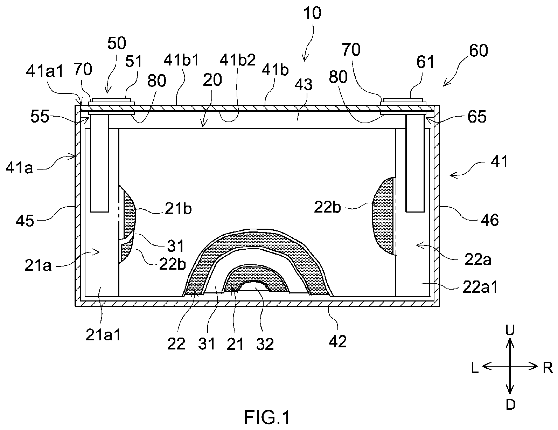

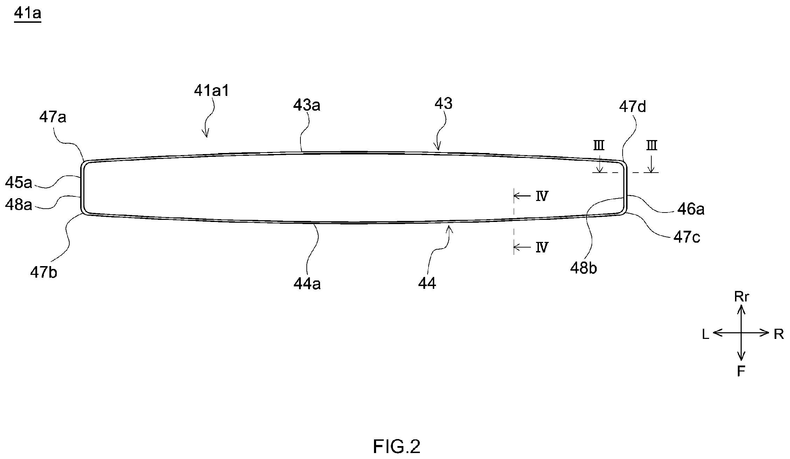

Fig. 1 is a partial sectional view of a secondary battery 10. Fig. 1 shows the state where the inside of the lithium-ion secondary battery 10 is exposed along one wide surface of a substantially cuboid battery case 41. The secondary battery 10 shown in Fig. 1 is a so-called sealed battery where a battery case 41 housing an electrode body 20 is sealed. Up, down, left, right, front, and rear directions are represented by the U, D, L, R, F, and Rr arrows, respectively, in the drawings. Herein, a wide surface portion 44 (see Figs. 1 and 2) facing a wide surface portion 43 of the secondary battery 10 is defined as "front (F)" (front surface), and the wide surface portion 43 is defined as "rear (Rr)," the sealing plate 41b side is defined as "upper (U)," the bottom portion 42 side is defined as "lower (D)," the narrow surfaces portion 45 side is defined as "left (L)," and the narrow surface portion 46 side is defined as "right (R)."

As shown in Fig. 1, the secondary battery 10 includes the electrode body 20 and the battery case 41. The battery case 41 includes a case body 41a having an opening 41a1 and a sealing plate 41b blocking the opening 41a1 of the case body 41a. The case body 41a houses the electrode body 20. Inner terminals 55 and 65 and external terminals 51 and 61 are attached to the sealing plate 41b via gaskets 70 and an insulators 80. In the embodiment, the inner terminal 55 is connected to a positive electrode current collector foil 21a of the electrode body 20. The external terminal 51 is connected to the inner terminal 55 and constitutes a positive electrode terminal 50 outside the battery case 41. The inner terminal 65 is connected to a negative electrode current collector foil 22a of the electrode body 20. The external terminal 61 is connected to the inner terminal 65, and constitutes a negative electrode terminal 60 outside the battery case 41.

### <Electrode Body 20>

The electrode body 20 is housed in the battery case 41 with being covered with an insulation film (not shown) or the like. The electrode body 20 includes a positive electrode sheet 21 as a positive electrode member, a negative electrode sheet 22 as a negative electrode member, and separator sheets 31 and 32 as a separator. The positive electrode sheet 21, the first separator sheet 31, a negative electrode sheet 22, and a second separator sheet 32 are each a long strip-like member.

In the positive electrode sheet 21, positive electrode active material layers 21b are formed on both surfaces of a positive electrode current collector foil 21a (e.g., an aluminum foil) having a predetermined width and a predetermined thickness except for a portion 21a1 which is set to have a certain width at one end in the width direction. For lithium-ion secondary batteries, the positive electrode active material is, for example, a material that can release lithium ions during charging and absorb lithium ions during discharging, such as a lithium transition metal composite. For the positive electrode active material, various kinds besides the lithium transition metal composite material are generally proposed without particular limitations.

In the negative electrode sheet 22, negative electrode active material layers 22b containing a negative electrode active material are formed on both surfaces of a negative electrode current collector foil 22a (here, a copper foil) having a predetermined width and a predetermined thickness except for a portion 22a1 which is set to have a certain width at one end in the width direction. For lithium-ion secondary batteries, the negative electrode active material is, for example, a material that absorbs lithium ions during charging and releases the absorbed lithium ions during discharging, such as natural graphite. For the negative electrode active material, various kinds besides the natural graphite are generally proposed without particular limitations.

The separator sheets 31 and 32 used may each be a porous resin sheet through which an electrolyte with a desired heat resistance can pass. For the separator sheets 31 and 32, various kinds are proposed without particular limitations.

The negative electrode active material layer 22b is formed to have a width greater than the width of the positive electrode active material layer 21b, for example. The widths of the separator sheets 31 and 32 are greater than that of the negative electrode active material layer 22b. The portion 21a1 where the positive electrode active material layer 21b is not formed and the portion 22a1 where the negative electrode active material layer 22b is not formed are disposed to face each other in the width direction. The positive electrode sheet 21, the first separator sheet 31, a negative electrode sheet 22, and a second separator sheet 32 are aligned in the length direction, and are wound up in turn on top of each other. The negative electrode active material layer 22b covers the positive electrode active material layer 21b with the separator sheets 31 and 32 interposed therebetween. The negative electrode active material layer 22b is covered with the separator sheets 31 and 32. The portion 21a1 protrudes from one side of the separator sheets 31 and 32 in the width direction. The portion 22a1 protrudes from the separator sheets 31 and 32 on the other side in the width direction.

As shown in Fig. 1, the above-mentioned electrode body 20 is flat along one plane including the winding axis so as to be housed in the case body 41a of the battery case 41. The portion 21a1 is disposed on one side, and the portion 22a1 is disposed on the other side, of the electrode body 20 along the winding axis.

### <Battery Case 41>

The battery case 41 houses the electrode body 20. The battery case 41 includes a case body 41a and a sealing plate 41b. The case body 41a is a bottomed member with an opening 41a1 on one side opposite to the bottom surface. In the present embodiment, the case body 41a has an opening in one side surface and a substantially cuboid square shape. The sealing plate 41b is a plate material which is attached to the opening 41a1 of the case body 41a. In this embodiment, the case body 41a and the sealing plate 41b are formed of aluminum or an aluminum alloy mainly containing aluminum in order to reduce weight and ensure the required rigidity. In the embodiment shown in Fig. 1, a wound electrode body 20 is shown as an example, but the structure of the electrode body 20 is not limited thereto. The structure of the electrode body 20 may have, for example, a lamination structure in which the positive electrode sheet and the negative electrode sheet are stacked alternately with separators interposed therebetween. The battery case 41 may house a plurality of electrode bodies 20.

The battery case 41 may house an electrolyte (not shown) together with the electrode body 20. The electrolyte used may be a nonaqueous electrolyte obtained by dissolving a supporting electrolyte in a nonaqueous solvent. Examples of the nonaqueous solvent include carbonate-based solvents such as ethyl methyl carbonate, dimethyl carbonate, and ethyl methyl carbonate. Examples of the supporting electrolyte include fluorine-containing lithium salts such as LiPF₆.

### <Case Body 41a>

Fig. 2 is a plan view of a case body 41a. The case body 41a is a member in bottomed rectangular parallelopiped shape with an opening 41a1 on one side opposite to the bottom surface. In the present embodiment, the case body 41a has an opening in one side surface and a substantially cuboid square shape. As shown in Figs. 1 and 2, the case body 41a has a bottom portion 42 forming a substantially rectangular bottom surface, a pair of wide surface portions 43 and 44, and a pair of narrow surface portions 45 and 46. The wide surface portions 43 and 44 in pair are each standing from the long side of the bottom portion 42. The narrow surface portions 45 and 46 in pair are each standing from the short side of the bottom portion 42. In one side surface of the case body 41a, an opening 41a1 surrounded by the pair of wide surface portions 43 and 44 and the pair of narrow surface portions 45 and 46 is formed. As shown in Fig. 2, the opening 41a1 of the case body 41a is a substantially rectangular opening having R portions 47a to 47d each having an arc shape.

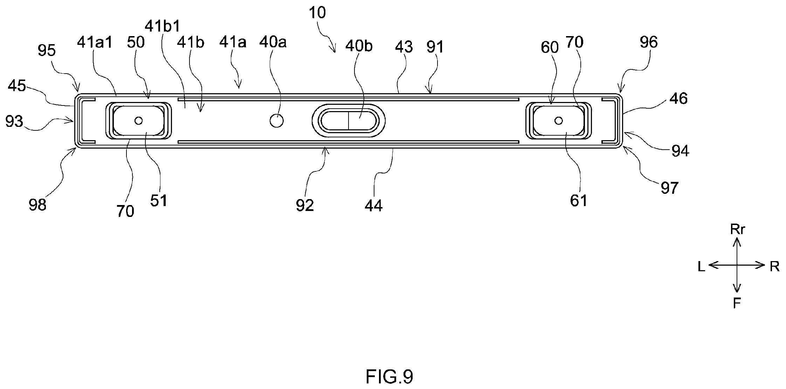

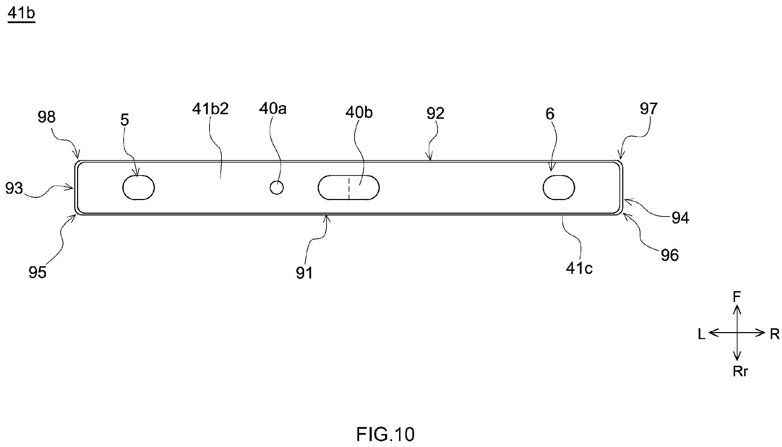

As shown in Fig. 2, the opening 41a1 of the case body 41a has a pair of long side portions 43a and 44a facing each other, a pair of short side portions 45a and 46a facing each other, and four R portions 47a to 47d. The long side portions 43a and 44a are upper edges of the wide surface portions 43 and 44. The short side portions 45a and 46a are upper edges of the narrow surface portions 45 and 46. The short side portions 45a and 46a are located at both ends of the pair of long side portions 43a and 44a. The R portions 47a to 47d are upper edges of outwardly bulging curved surfaces connecting the wide surface portions 43 and 44 and the narrow surface portions 45 and 46. The R portions 47a to 47d are provided at the four corners of the opening 41a1 of the case body 41a, along the curved lines connecting the long side portions and the short side portions. In the embodiment, the opening 41a1 of the case body 41a is molded so that the long side portions 43a and 44a of the opening 41a1 bulge slightly outward before the sealing plate 41b is attached. When the sealing plate 41b is attached to the opening 41a1, short side portions 93 and 94 (see Figs. 9 and 10) of the sealing plate 41b are placed on steps 48a and 48b of the opening 41a1. As a result, the opening 41a1 of the case body 41a is closed by the sealing plate 41b. In this state, the opening 41a1 of the case body 41a is clamped by the long side portions 43a and 44a. As a result, this holds the sealing plate 41b between the long side portions 43a and 44a of the opening 41a1 of the case body 41a. The sealing plate 41b and the case body 41a are welded together by laser irradiation and scanning in the circumferential direction at the boundary site between the sealing plate 41b and the case body 41a. As a result, the opening 41a1 of the case body 41a is sealed by the sealing plate 41b.

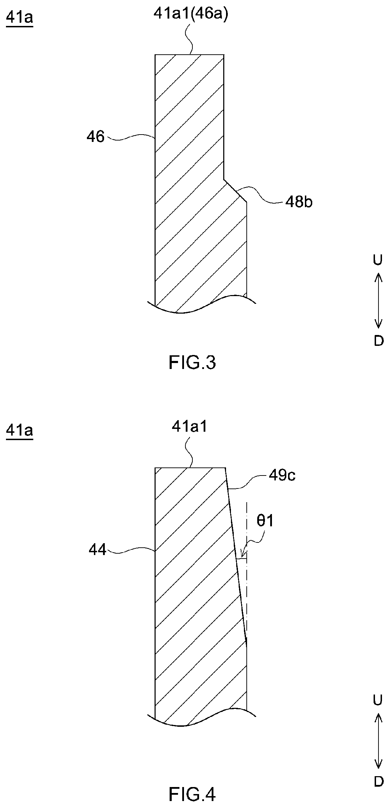

Fig. 3 is a sectional view taken along line III-III of Fig. 2. As shown in Figs. 2 and 3, the opening 41a1 of the case body 41a has steps 48a and 48b in the inner surfaces of the short side portions 45a and 46a in pair facing each other. The steps 48a and 48b are portions that support the sealing plate 41b attached to the opening 41a1 of the case body 41a. The steps 48a and 48b are located at predetermined positions from the upper edges of the short side portions 45a and 46a. In this embodiment, the positions of the steps 48a and 48b on the inner surfaces of the short side portions 45a and 46a are defined such that the height of the upper edge of the opening 41a1 of the case body 41a and the height of the upper surface of the sealing plate 41b match when the sealing plate 41b is attached to the opening 41a1 of the case body 41a. Specifically, the steps 48a and 48b are provided at a height corresponding to the thickness of the sealing plate 41b from the upper edges of the short side portions 45a and 46a. In this embodiment, the short side portions 45a and 46a of the case body 41a have a thickness below the steps 48a and 48b that is higher than a thickness at the upper edge. When viewed from the upper edges of the short side portions 45a and 46a of the case body 41a, the steps 48a and 48b protrude inward of the case from the upper edge of the case body 41a. In the embodiment shown in Fig. 3, the steps 48a and 48b each have a tapered surface inclined inward toward the bottom portion 42. The taper angle may be 40° to 55°. The steps 48a and 48b of the short side portions 45a and 46a are continuous to part of the R portions 47a to 47d. In this embodiment, the edge of the lower surface 41b2 of the sealing plate 41b is provided with a C plane. The tapered surfaces of the steps 48a and 48b of the short side portions 45a and 46a may be aligned with the angle of the chamfered portion.

Fig. 4 is a sectional view taken along line IV-IV of Fig. 2. In the form shown in Figs. 2 and 4, the inner surfaces of the long side portions 43a and 44a in pair facing each other are provided with tapered surfaces 49c inclined inward toward their lower portions. The angle of each of the tapered surfaces 49c may be set such that when the sealing plate 41b i attached to the opening 41a1 of the case body 41a, it is pushed with light force, i.e., lightly press-fitted. In this embodiment, the tapered surface 49c is inclined at an angle θ1 from the upper edge of each of the long side portions 43a and 44a with respect to the direction orthogonal to the opening 41a1 of the case body 41a. The angle θ1 may be 5° to 20° (e.g., about 15°).

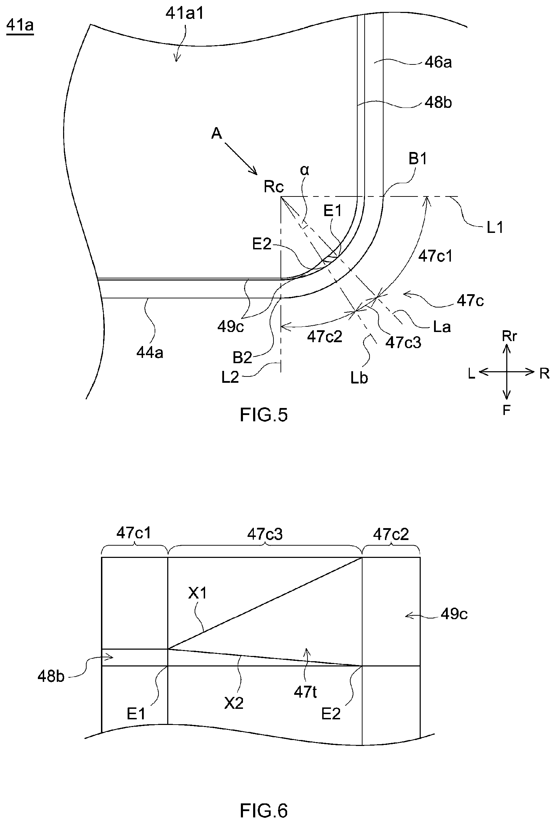

Fig. 5 is a partially enlarged view of Fig. 2. Fig. 5 shows a partially enlarged R portion 47c of Fig. 2. As shown in Fig. 5, the R portion 47c is provided with a gradual change region 47c3 where the shape of the step 48b changes to be gradually close to the shape of the inner surface of the long side portion 44a toward the long side portion 44a along the R portion 47c. The R portions 47a, 47b, and 47d have the same configuration as the R portion 47c; thus, illustration and description thereof may be omitted.

In the form shown in Figs. 2, 4, and 5, the inner surfaces of the long side portions 43a and 44a in pair facing each other are provided with tapered surfaces 49c inclined inward toward their lower portions. In the gradual change region 47c3, the shape of the step 48b may be configured to change so as to be gradually close to the tapered surface 49c toward the long side portion 44a along the R portion 47c.

In this embodiment, the gradual change region 47c3 is provided in the range from 45° to 90° from the center Rc of the R portion 47c, starting from the boundary B1 between the R portion 47c and the short side portion 46a. As shown in Fig. 5, when the straight line L1 connecting the center Rc and the boundary B1 is set as a reference (0°), the gradual change region 47c3 may be located in the range from 45° or more and 90° or less (e.g., 50° or more and or less 70°) from the straight line L1 with the center Rc as the center. In Fig. 5, the gradual change region 47c3 is a portion sandwiched between straight lines La and Lb. Although not particularly limited thereto, the angle α formed between the straight lines La and Lb may be set to, for example, 3° to 10°.

In the form shown in Fig. 5, the curved portion 47c has a first region 47c1, a second region 47c2, and a gradual change region 47c3. The first region 47c1 is a region adjacent to the short side portion 46a. In Fig. 5, the first region 47c1 is a region sandwiched between straight lines L1 and La. The second region 47c2 is a region adjacent to the long side portion 44a. In Fig. 5, the second region 47c2 is a region sandwiched between straight lines Lb and L2. The straight line L2 is a straight line connecting the center Rc and a boundary B2 between the R portion 47c and the long side portion 44a. As shown in Fig. 5, the first region 47c1 is provided with the step 48b. The step 48b is provided from the short side portion 46a to the first region 47c1.

As shown in Fig. 5, the second region 47c2 is provided with the tapered surface 49c. In this embodiment, the tapered surface 49c is provided from the second region 47c2 to the long side portion 44a. In the form shown in Fig. 5, the gradual change region 47c3 is provided between the first region 47c1 and the second region 47c2. In the gradual change region 47c3, the shape of the step 48b in the first region 47c1 may be configured to change so as to be gradually close to the tapered surface 49c from the second region 47c2 and the long side portion 44a along the R portion 47c.

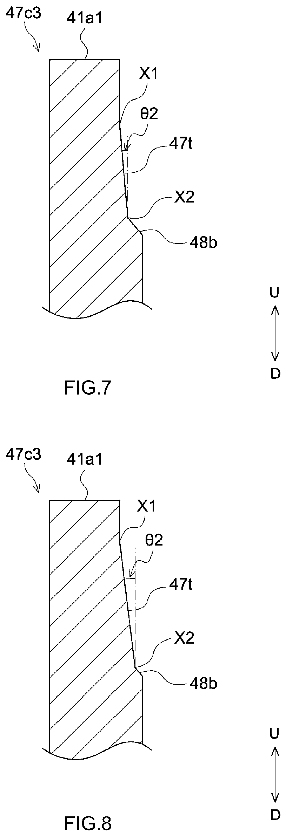

Fig. 6 is a view seen from the arrow A in Fig. 5. Figs. 7 and 8 are sectional views of the gradual change region 47c3. The gradual change region 47c3 is a region where the shape of the inner surface changes. Thus, the sectional shape of the gradual change region 47c3 is not defined. Fig. 6 is a view of the R portion 47c seen from the inside of the case body 41a. Figs. 6 to 8 show the process of changing the shape of the inner surface from the step 48b of the first region 47c1 toward the tapered surface 49c of the second region 47c2 in the gradual change region 47c3.

In this embodiment, the gradual change region 47c3 has two tapered surfaces. For example, the shapes of the two tapered surfaces gradually change from the first region 47c1 toward the second region 47c2, so that the step 48b and the tapered surfaces 49c are continuous. In this embodiment, the two tapered surfaces 47t include the tapered surface of the step 48b and the tapered surface 47t. The shape of the tapered surface 47t changes from the endpoint E1 of the first region 47c1 toward the startpoint E2 of the second region 47c2, for example. As shown in Figs. 7 and 8, the tapered surface 47t is inclined inward toward its lower portion. As shown in Fig. 6, the tapered surface 47t gradually increases in size from the endpoint E1 of the first region 47c1 toward the startpoint E2 of the second region 47c2, becoming a tapered surface 49c at the startpoint E2. Further, the tapered surface of the step 48b gradually decreases in size from the endpoint E1 toward the startpoint E2, and is absorbed by the tapered surface 49c at the startpoint E2.

As shown in Figs. 6 to 8, an upper end X1 of the tapered surface 47t is provided between the step 48b and the upper edge of the opening 41a1. As shown in Figs. 3 to 8, from the endpoint E1 to the startpoint E2, the upper end X1 is provided from the upper end of the step 48b at the endpoint E1 gradually toward the opening 41a1, and reaches the upper edge of the opening 41a1 at the startpoint E2. As shown in Figs. 3 to 7, from the endpoint E1 toward the startpoint E2, a lower end X2 of the tapered surface 47t is provided from the upper end of the step 48b at the endpoint E1 gradually toward the bottom portion 42 (see Fig. 1), and reaches the lower end of the tapered surface 49c at the startpoint E2.

Further, in this embodiment, the tapered surface 47t is inclined at an angle θ2 with respect to the direction orthogonal to the opening 41a1. The angle θ2 may be, for example, 5° to 30°. In the gradual change region 47c3, for example, the angle θ2 gradually changes from the endpoint E1 toward the startpoint E2 in the range from 5° to 30°, so that the step 48b and the tapered surface 49c are continuous.

In the gradual change region 47c3, the shapes of two tapered surface (the tapered surface 47t and the tapered surface of the step 48b) gradually change, and the step 48b and the tapered surface 49c are continuous. This substantially prevents partial over-interference and improves assemblability.

### <Sealing Plate 41b>

Fig. 9 is a plan view of the secondary battery 10 with a sealing plate 41b attached. As shown in Figs. 1 and 9, the sealing plate 41b is a substantially rectangular plate member attached to the opening 41a1 of the case body 41a and having a shape corresponding to an upper edge of the opening 41a1. In this embodiment, the sealing plate 41b is attached to the inner side of the opening 41a1 along the inner surface of the opening 41a1 of the case body 41a.

In this embodiment, the sealing plate 41b is provided with a liquid injection hole 40a and a safety valve 40b. A sealing member is attached to the liquid injection hole 40a after the sealing plate 41b is attached to the opening 41a1 of the case body 41a and an electrolyte is injected into the case body 41a. Fig. 9 shows the state where the sealing plate 41b is assembled and welded to the opening 41a1 of the case body 41a. In Fig. 9, the sealing member is not attached to the sealing plate 41b. The safety valve 40b is a thin portion which breaks when the pressure inside the battery case 41 reaches a pressure larger than a predetermined pressure.

A positive electrode terminal 50 and a negative electrode terminal 60 are attached to an upper surface 41b1 of the sealing plate 41b. The sealing plate 41b includes terminal attachment holes 5 and 6 to which a positive electrode terminal 50 and a negative electrode terminal 60 are attached (see Fig. 10). As shown in Figs. 1 and 9, the positive electrode terminal 50 includes an external terminal 51 and an inner terminal 55. The negative electrode terminal 60 includes an external terminal 61 and an inner terminal 65. The inner terminals 55 and 65 are attached to the inner side of the sealing plate 41b via an insulator 80. The external terminals 51 and 61 are attached to the outer side of the sealing plate 41b via a gasket 70. The inner terminals 55 and 65 extend into the case body 41a. A portion 21a1 of the positive electrode current collector foil 21a in the electrode body 20 and a portion 22a1 of the negative electrode current collector foil 22a the electrode body 20 are attached respectively to the inner terminals 55 and 65 attached to both sides of sealing plate 41b in the longitudinal direction.

In this embodiment, as shown in Fig. 9, the sealing plate 41b includes a pair of long side portions 91 and 92, a pair of short side portions 93 and 94, and R portions 95 to 98 provided at four corners. The long side portions 91 and 92 in pair face each other. The short side portions 93 and 94 in pair are located at both ends of the long side portions 91 and 92 in pair and face each other. The R portions 95 to 98 are provided at four corners between the long side portions 91 and 92 and the short side portions 93 and 94. As shown in Fig. 9, the R portions 95 to 98 are provided between the long side portions 91 and 92 and the short side portions 93 and 94, and are curved to bulge outward of the sealing plate 41b.

As shown in Figs. 1 and 9, when the sealing plate 41b is attached to the case body 41a, the upper surface 41b1 of the sealing plate 41b is positioned to face outside of the secondary battery 10. As shown in Fig. 1, the lower surface 41b2 of the sealing plate 41b is positioned to face inside of the secondary battery 10. The upper surface 41b1 is, for example, a surface which faces outside of the case body 41a when attached to the opening 41a1 of the case body 41a. The lower surface 41b2 is, for example, a surface which faces inside of the case body 41a when attached to the opening 41a1 of the case body 41a.

Fig. 10 is a back surface view of the sealing plate 41b. As shown in Fig. 10, the edge of the lower surface 41b2 of the sealing plate 41b is chamfered. In this embodiment, a chamfered face 41c is provided at the edge of the lower surface 41b2 of the sealing plate 41b.

Although not shown in the drawings, a region of the lower surface 41b2 superimposed on the gradual change region 47c3 when the sealing plate 41b is attached to the opening 41a1 may be chamfered according to the shape of the gradual change region 47c3.

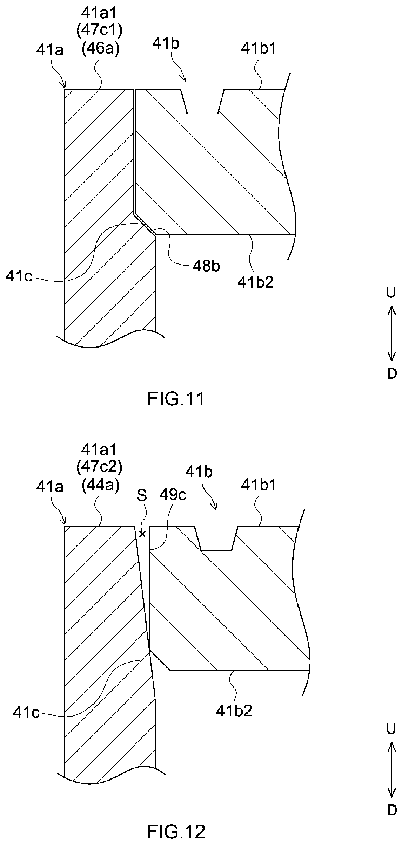

Figs. 11 and 12 are each a sectional view of an opening 41a1 with the sealing plate 41b attached thereto. Figs. 11 and 12 are each a partial sectional view of the opening 41a1 of the case body 41a in the state where the sealing plate 41b is attached to the opening 41a1. Fig. 11 is a sectional view of a portion of the case body 41a where the step 48b is formed (e.g., the short side portion 46a or the first region 47c1). In this embodiment, the sealing plate 41b attached to the opening 41a1 of the case body 41a is supported by the step 48b. As shown in Fig. 11, the chamfered face 41c of the sealing plate 41b is located on the step 48b.

Fig. 12 is a sectional view of a portion of the case body 41a where the tapered surface 49c is formed (e.g., the long side portion 44a or the second region 47c2). As shown in Fig. 12, a gap S is formed between the portion where the tapered surface 49c is formed and the sealing plate 41b. The gap S is a gap that is wider toward the upper edge of the opening 41a1 of the case body 41a.

In the battery case 41 disclosed herein, the steps 48a and 48b are provided in the inner surfaces of the short side portions 45a and 46a. The R portions 47a to 47d are each provided with a gradual change region where the shape of the step 48a, 48b gradually changes to be gradually close to the shapes of the inner surfaces of the long side portions 43a and 44a. In other words, in the battery case 41, the R portions 47a to 47d are provided with gradual change regions, so that the shapes of the steps 48a and 48b of the short side portions 45a and 46a become gradually close to the shapes of the inner surfaces of the long side portions 43a and 44a. In this case, when the sealing plate 41b is attached to the opening 41a1 of the case body 41a, portions in contact with the sealing plate 41b are generated in the gradual change sections of the R portions 47a to 47d of the opening 41a1 of the case body 41a. The portions in contact with the sealing plate 41b allow the sealing plate 41b to be press-fitted with smaller force (lightly press-fitted) into the opening 41a1 of the case body 41a. This makes it difficult for the sealing plate 41b to slide out of place and improves assemblability when the sealing plate 41b is attached to the opening 41a1 of the case body 41a. The gradual change regions provided in the R portions 47a to 47d achieve the light press-fitting even when there are variations in dimensions of the opening 41a1 of the case body 41a and the sealing plate 41b. Further, the dimensional accuracy of the opening 41a1 of the case body 41a and the sealing plate 41b required for achieving the light press-fitting can be relaxed. This facilitates dimensional control of the sealing plate 41b and the case body 41a. Further, when there is a gradual change region, the gap between the opening 41a1 of the case body 41a and the sealing plate 41b is smaller than when there is no gradual change region. This makes it difficult for the laser to escape.

In this embodiment, the inner surface of the long side portion 44a is a tapered surface 49c. Because the inner surface of the long side portion 44a is a tapered surface 49c, the inner surface of a portion of the long side portion 44a adj acent to the R portion 47c may be a tapered surface. Therefore, light press-fitting can be achieved in the portion adjacent to the curved portion 47c in addition to the gradual change region 47c3. When the sealing plate 41b is attached to the opening 41a1 with such a configuration, a gap S is formed between the portion where the tapered surface 49c is formed and the sealing plate 41b. Such a gap S makes it easier for the sealing plate 41b to be lightly press-fitted. Therefore, the configuration allows the effect of improving the assemblability to be achieved more suitably, and the dimensional control to be conducted more easily.

In this embodiment, the gradual change region 47c3 is provided in the range from 45° to 90° from the center Rc, starting from the boundary B1 between the R portion 47c and the short side portion 46a. When the sealing plate 41b is attached, the gradual change region 47c3 can be formed in a region which is difficult to be dimensionally controlled. Thus, light press-fitting is achieved in the region, and the assemblability can be achieved more effectively. In addition, the step 48b is provided in the range of at least less than 45° from the center Rc. Therefore, even if the dimensional accuracy of the sealing plate 41b causes a gap in the range of at least less than 45° from the center Rc of the R portion 47c, laser escape in the range of at least less than 45° from the center Rc of the R portion 47c can be substantially prevented.

In this embodiment, the edge of the lower surface 41b2 of the sealing plate 41b is chamfered. This makes the shape of the lower surface 41b2 of the sealing plate 41b becomes smaller relative to the upper edge of the opening 41a1 of the case body 41a even when the sealing plate 41b has a shape which matches the opening 41a1 of the case body 41a. This makes it easy to fit the sealing plate 41b into the opening 41a1 of the case body 41a. Then, light press-fitting is achieved at the opening 41a1 of the case body 41a. Thus, when the sealing plate 41b is attached to the opening 41a1, interference between the opening 41a1 and the sealing plate 41b is less likely to occur. Accordingly, in the battery case 41, a configuration where the sealing plate 41b is easily fitted into the case body 41a can be achieved.

A region of the edge of the lower surface 41b2 of the sealing plate 41b superimposed on the gradual change region 47c3 may be chamfered according to the shape of the gradual change region 47c3. This makes it easy to fit the sealing plate 41b into the opening 41a1.

The secondary battery 10 includes a battery case 41. As mentioned above, in the battery case 41, assemblability is improved when the sealing plate 41b is attached to the opening 41a1 of the case body 41a. Thus, in the secondary battery 10 including the battery case 41, suitable dimensional accuracy is achieved.

### <<Second Embodiment>>

In the first embodiment, the inner surfaces of the long side portions 43a and 44a are each a tapered surface 49c. However, the present disclosure is not limited thereto. Although not shown in the drawings, the inner surfaces of the long side portions 43a and 44a in pair facing each other may each be a flat surface without steps and tapers. In this case, in the gradual change region 47c3, the shapes of the steps 48a and 48b may be configured to change so as to be gradually close to the flat shape toward the long side portions 43a and 44a along the R portions 47a to 47d. Even when the long side portions 43a and 44a are flat, the effect of improving assemblability can be achieved. Although not particularly limited thereto, the tapered surface 49c may be provided in the second region 47c2 of the R portion 47c if necessary.

### <<Other Embodiments>>

For example, the chamfering shape of the edge of the lower surface 41b2 of the sealing plate 41b is not limited to the shape of the chamfered face 41c. The edge of the lower surface 41b2 may be rounded, for example.

Although embodiments of the technology disclosed herein have been described in detail above, they are mere examples and do not limit the appended claims.

## Claims

1. A battery case (41) comprising:
a case body (41a) in bottomed rectangular parallelopiped shape having a substantially rectangular opening (41a1) in one side surface facing a bottom surface (42); and
a substantially rectangular sealing plate (41b) attached to the opening (41a1) and having a shape corresponding to an upper edge of the opening (41a1),
wherein
the opening (41a1) of the case body (41a) comprises:
a pair of long side portions (43a, 44a) facing each other;
a pair of short side portions (45a, 46a) located at both ends of the pair of long side portions (43a, 44a) and facing each other;
R portions (47a - 47d) provided at four corners between the long side portions (43a, 44a) and the short side portions (45a, 46a); and
steps (48a, 48b) protruding from the inner surfaces of the pair of short side portions (45a, 46a),
each the R portions (47a - 47d) comprises a gradual change region (47c3), and
in each the gradual change region (47c3), along each the R portions (47a - 47d), a shape of each the steps (48a, 48b) changes to be gradually close to a shape of each the inner surfaces of the long side portions (43a, 44a) toward the long side portions (43a, 44a), wherein
the inner surfaces of the pair of long side portions (43a, 44a) facing each other are tapered surfaces (49c) inclined inward toward their lower portions, and
in the gradual change region (47c3), the shape of each the steps (48a, 48b) changes to be gradually close to each the tapered surfaces (49c) toward the long side portions (43a, 44a),
the battery case (41) **characterized by**
having a gap (S) which is wider toward the upper edge of the opening (41a1), between a portion having each the tapered surfaces (49c) and the sealing plate (41b), with the sealing plate (41b) attached to the opening (41a1).

2. The battery case (41) according to claim 1, wherein,
when a straight line (L1) connecting a center (Rc) and a boundary (B1) is set as a reference (0°), the gradual change region (47c3) is provided in a range from 45° or more and 90° or less from a center (Rc) of each of the R portions (47a - 47d), starting from a boundary (B1) between each of the R portions (47a - 47d) and each of the short side portions (45a, 46a).

3. The battery case (41) according to claim 1 or 2, wherein an edge of the lower surface (41b2) of the sealing plate (41b) is chamfered.

4. The battery case (41) according to claim 3, wherein a region of the edge of the lower surface (41b2) superimposed on the gradual change region (47c3) with the sealing plate (41b) attached to the opening (41a1) is chamfered according to a shape of the gradual change region (47c3).

5. A secondary battery (10) comprising the battery case (41) according to any one of claims 1 - 4.

## Patentansprüche

1. Batteriegehäuse (41), aufweisend:
einen Gehäusekörper (41a) in einer rechteckigen Parallelepipedform mit Boden mit einer im Wesentlichen rechteckigen Öffnung (41a1) in einer Seitenfläche, die einer Bodenfläche (42) gegenüberliegt; und
eine im Wesentlichen rechteckige Dichtungsplatte (41b), die an der Öffnung (41a1) befestigt ist und eine Form aufweist, die einer oberen Kante der Öffnung (41a1) entspricht,
wobei
die Öffnung (41a1) des Gehäusekörpers (41a) aufweist:
ein Paar langer Seitenabschnitte (43a, 44a), die einander gegenüberliegen;
ein Paar kurzer Seitenabschnitte (45a, 46a), die sich an beiden Enden des Paars langer Seitenabschnitte (43a, 44a) befinden und einander gegenüberliegen;
R-Abschnitte (47a-47d), die sich an vier Ecken zwischen den langen Seitenabschnitten (43a, 44a) und den kurzen Seitenabschnitten (45a, 46a) befinden; und
Stufen (48a, 48b), die von den Innenflächen des Paars kurzer Seitenabschnitte (45a, 46a) hervorstehen,
wobei jeder der R-Abschnitte (47a-47d) einen Bereich mit gradueller Änderung (47c3) aufweist, und
bei jedem Bereich mit gradueller Änderung (47c3), entlang der R-Abschnitte (47a-47d), eine Form von jeder der Stufen (48a, 48b) sich ändert, so dass sie sich einer Form von jeder der Innenflächen der langen Seitenabschnitte (43a, 44a) in Richtung der langen Seitenabschnitte (43a, 44a) graduell nähert, wobei
die Innenflächen des Paars langer Seitenabschnitte (43a, 44a), die einander gegenüberliegen, kegelstumpfartige Oberflächen (49c) sind, die in Richtung ihrer unteren Abschnitte nach innen geneigt sind, und
in dem Bereich mit gradueller Änderung (47c3) die Form von jeder der Stufen (48a, 48b) sich ändert, so dass sie sich graduell jeder der kegelstumpfartigen Oberflächen (49c) in Richtung der langen Seitenabschnitte (43a, 44a) annähert,
wobei das Batteriegehäuse (41) **dadurch gekennzeichnet ist, dass**
es eine Lücke (S) aufweist, die breiter in Richtung der oberen Kante der Öffnung (41a1) ist, zwischen einem Abschnitt mit jeder der kegelstumpfartigen Oberflächen (49c) und der Dichtungsplatte (41b), wobei die Dichtungsplatte (41b) an der Öffnung (41a1) befestigt ist.

2. Batteriegehäuse (41) nach Anspruch 1, wobei,
wenn eine Gerade (L1), die eine Mitte (Rc) und eine Grenze (B1) verbindet, als eine Referenz (0°) gesetzt ist, der Bereich mit gradueller Änderung (47c3) in einem Bereich von 45° oder mehr und 90° oder weniger von einer Mitte (Rc) von jedem der R-Abschnitte (47a-47d) vorhanden ist, beginnend an einer Grenze (B1) zwischen jedem der R-Abschnitte (47a-47d) und jedem der kurzen Seitenabschnitte (45a, 46a).

3. Batteriegehäuse (41) nach Anspruch 1 oder 2, wobei eine Kante der unteren Oberfläche (41b2) der Dichtungsplatte (41b) abgeschrägt ist.

4. Batteriegehäuse (41) nach Anspruch 3, wobei ein Bereich der Kante der unteren Oberfläche (41b2), die den Bereich mit gradueller Änderung (47c3) überlagert, wobei die Dichtungsplatte (41b) an der Öffnung (41a1) befestigt ist, gemäß einer Form des Bereichs mit gradueller Änderung (47c3) abgeschrägt ist.

5. Sekundärbatterie (10), die das Batteriegehäuse (41) nach einem der Ansprüche 1 bis 4 aufweist.

## Revendications

1. Boîtier de batterie (41) comprenant :
un corps de boîtier (41a) en forme de parallélépipède rectangle à fond plat, comportant une ouverture sensiblement rectangulaire (41a1) dans une surface latérale faisant face à une surface inférieure (42) ; et
une plaque d'étanchéité sensiblement rectangulaire (41b) fixée à l'ouverture (41a1) et ayant une forme correspondant à un bord supérieur de l'ouverture (41a1),
dans lequel
l'ouverture (41a1) du corps de boîtier (41a) comprend :
une paire de parties latérales longues (43a, 44a) se faisant face ;
une paire de parties latérales courtes (45a, 46a) situées aux deux extrémités de la paire de parties latérales longues (43a, 44a) et se faisant face ;
des parties R (47a à 47d) prévues aux quatre coins entre les parties latérales longues (43a, 44a) et les parties latérales courtes (45a, 46a) ; et
des marches (48a, 48b) faisant saillie à partir des surfaces intérieures de la paire de parties latérales courtes (45a, 46a),
chaque partie R (47a à 47d) comprend une région de changement progressif (47c3), et
dans chaque région de changement progressif (47c3), le long de chaque partie R (47a à 47d), la forme de chaque marche (48a, 48b) se rapproche progressivement de la forme de chaque surface intérieure des parties latérales longues (43a, 44a) vers les parties latérales longues (43a, 44a), dans laquelle
les surfaces intérieures de la paire de parties latérales longues (43a, 44a) se faisant face sont des surfaces effilées (49c) inclinées vers l'intérieur vers leurs parties inférieures, et
dans la région de changement progressif (47c3), la forme de chacun des marches (48a, 48b) se rapproche progressivement de chacune des surfaces effilées (49c) vers les parties latérales longues (43a, 44a),
le boîtier de batterie (41) étant **caractérisé par**
le fait de comporter un espace (S) qui est plus large vers le bord supérieur de l'ouverture (41a1), entre une partie comportant chacune des surfaces effilées (49c) et la plaque d'étanchéité (41b), la plaque d'étanchéité (41b) étant fixée à l'ouverture (41a1).

2. Le boîtier de batterie (41) selon la revendication 1, dans lequel,
lorsqu'une ligne droite (L1) reliant un centre (Rc) et une limite (B1) est définie comme référence (0°), la région de changement progressif (47c3) est prévue dans une plage de 45° ou plus à 90° ou moins à partir d'un centre (Rc) de chacune des parties R (47a à 47d), à partir d'une limite (B1) entre chacune des parties R (47a à 47d) et chacune des parties latérales courtes (45a, 46a).

3. Le boîtier de batterie (41) selon la revendication 1 ou 2, dans lequel un bord de la surface inférieure (41b2) de la plaque d'étanchéité (41b) est chanfreiné.

4. Le boîtier de batterie (41) selon la revendication 3, dans lequel une région du bord de la surface inférieure (41b2) superposée à la région de changement progressif (47c3) avec la plaque d'étanchéité (41b) fixée à l'ouverture (41a1) est chanfreinée selon une forme de la région de changement progressif (47c3).

5. Batterie secondaire (10) comprenant le boîtier de batterie (41) selon l'une quelconque des revendications 1 à 4.
